# EUROPÄISCHE PATENTANMELDUNG

(11) **EP 1 085 402 A2**
(43) Veröffentlichungstag der Anmeldung: **21.03.2001**
(21) Anmeldenummer: 00117574.4
(22) Anmeldetag: 16.08.2000
(51) Int. Cl.: G06F 3/023, G06F 3/033

(54) **Verfahren zur Darstellung eines Anzeige- und/oder Eingabefeldes einer Bedienvorrichtung und Bedienvorrichtung zur Durchführung des Verfahrens**

(30) Priorität: 06.07.2000 DE 10032375; 13.09.1999 EP 99118164
(71) Anmelder: Mannesmann VDO AG, 60388 Frankfurt am Main (DE)
(72) Erfinder: Krekels, Hans-Gerd, Dr., 64380 Rossdorf (DE); Clouard, Frederic, 78280 Guyancourt (FR)
(74) Vertreter: Rassler, Andrea, Dipl.-Phys.

(57) **Zusammenfassung**

Die Erfindung betrifft ein Verfahren zur Darstellung einer mit einem Eingabemittel (3) aktivierbaren Schaltfläche (5) und eines mit der Schaltfläche (5) korrespondierenden Anzeige- und/oder Eingabefeldes (6) auf einem Bildschirm (4) einer Anzeigeeinheit (2) einer die Anzeigeeinheit (2) und das Eingabemittel (3) aufweisenden Bedienvorrichtung (1), insbesondere in einem Kraftfahrzeug, wobei die Schaltfläche (5) auf dem Bildschirm (4) dargestellt wird, die Schaltfläche (5) durch Betätigung des Eingabemittels (3) aktiviert wird und unter Beibehaltung der Darstellung der Schaltfläche (5) eine Darstellung des Anzeige- und/oder Eingabefeldes (6) auf dem Bildschirm (4) ausgehend von der Schaltfläche (5) sukzessive aufgebaut wird.

Darüber hinaus betrifft die Erfindung eine Bedienvorrichtung (1) zur Durchführung vorgenannten Verfahrens.

## Beschreibung

Die Erfindung betrifft ein Verfahren zur Darstellung einer mit einem Eingabemittel aktivierbaren Schaltfläche und eines mit der Schaltfläche korrespondierenden Anzeige- und/oder Eingabefeldes auf einem Bildschirm einer Anzeigeeinheit einer die Anzeigeeinheit und das Eingabemittel aufweisenden Bedienvorrichtung, insbesondere in einem Kraftfahrzeug. Darüber hinaus betrifft die Erfindung eine Bedienvorrichtung, insbesondere für ein Kraftfahrzeug, zur Durchführung vorgenannten Verfahrens mit einer einen Bildschirm aufweisenden Anzeigeeinheit und mit einem Eingabemittel, wobei auf dem Bildschirm eine mit dem Eingabemittel aktivierbare Schaltfläche und ein mit der Schaltfläche korrespondierendes Anzeige- und/oder Eingabefeld darstellbar ist.

Derartige Verfahren und Bedienvorrichtungen sind bekannt und werden zum Beispiel in Kraftfahrzeugen zur Bedienung verschiedener Geräte wie Navigationseinrichtungen oder Radios verwendet. Die Bedienung der Geräte erfolgt dabei mittels an dem jeweiligen Gerät angeordneten Stellelementen wie Tasten und/oder Dreh- und Schiebereglern. Für jedes Gerät ist dabei eine Mehrzahl von Stellelementen notwendig, was sowohl zu einer großen Anzahl und einer damit verbundenen Unübersichtlichkeit der Stellelemente in dem Kraftfahrzeug als auch zu sehr kleinen Abmessungen der Stellelemente selbst führt. Daher ist es bekannt, zur Verringerung der Anzahl der Stellelemente in der jeweiligen Bedienvorrichtung ein Display vorzusehen, auf dem verschiedene Menüstrukturen darstellbar sind, über die jeweils einzelne Funktionen der Geräte anwählbar sind. Dennoch führt eine Vielfalt von Geräten und eine hohe Anzahl der Funktionen jedes einzelnen Gerätes zu einer Unübersichtlichkeit der Stellelemente und damit zu einem erhöhten Bedienungsaufwand für einen Fahrzeugführer. Der Fahrzeugführer wird in erheblichem Maß von dem Verkehrsgeschehen abgelenkt, da die Bedienung der einzelnen Geräte ein erhöhtes Maß an Aufmerksamkeit verlangt.

Für eine einfache Bedienbarkeit ansteuerbarer Geräte und vor allem auch für eine leichte Erfaßbarkeit einer auf dem Bildschirm dargestellten Anzeige ist bereits ein Darstellungsverfahren und eine dieses Verfahren anwendende Bedienvorrichtung bekannt, bei welchem bei einer Umschaltung unterschiedlicher, ansteuerbarer Menüs untereinander das nicht mehr darzustellende Menü nach und nach vom Bildschirm verschwindet und gleichzeitig das folgende Menü aufgebaut wird. Damit erfolgt die Umschaltung zwischen den Menüs nicht schlagartig, sondern ein Bediener kann ein neues Menü aufrufen, ohne das bisher dargestellte Menü aus den Augen zu verlieren. Nachteilig ist bei diesem Verfahren und dieser Vorrichtung aber, daß nach dem Aufbau des neuen Menüs für den Bediener visuell keinerlei Beziehung zum vorhergehenden Menü und insbesondere zu einer beispielsweise aus diesem angewählten Funktion besteht. Vor allem bei zeitlichen Unterbrechungen des Bedienvorgangs ist der Bediener mithin bezüglich einer Zuordnung der Darstellung auf dem Bildschirm zu einem Gerät oder einer Funktion allein auf sein Gedächtnis angewiesen. Gegebenenfalls müssen Bedienschritte unnötigerweise mehrfach ausgeführt werden.

Um hier Abhilfe zu schaffen, ist es Aufgabe vorliegender Erfindung, ein Verfahren zur Darstellung eines Anzeige- und/oder Eingabefeldes einer Bedienvorrichtung sowie eine Bedienvorrichtung zur Durchführung des Verfahrens zu schaffen, welches/welche Bedienungen erleichtert und eine einfache Erfaßbarkeit von Bedienungsabläufen und -Strukturen gewährleistet.

Diese Aufgabe wird bei einem eingangs genannten Verfahren erfindungsgemäß dadurch gelöst, daß die Schaltfläche auf dem Bildschirm dargestellt wird, daß die Schaltfläche durch Betätigung des Eingabemittels aktiviert wird und daß unter Beibehaltung der Darstellung der Schaltfläche eine Darstellung des Anzeige- und/oder Eingabefeldes auf dem Bildschirm ausgehend von der Schaltfläche sukzessive aufgebaut wird.

Für den Bediener ist somit ein Zusammenhang zwischen der Schaltfläche und dem Anzeige- und/oder Eingabefeld dauerhaft visualisiert. Auch nach einer Unterbrechung des Bedienvorgangs ist der Bediener über die Bedienstruktur und den derzeitigen Standpunkt innerhalb dieser Struktur unmittelbar informiert; dadurch wird die Bedienung besonders einfach und zielsicher, ohne daß der Bediener auf sein Gedächtnis zurückgreifen müßte. Das ist insbesondere bei einer Anwendung des Verfahrens in Kraftfahrzeugen von Vorteil, da hier jede auch nur geringe Ablenkung des Fahrzeugführers von dem Verkehrsgeschehen die Verkehrssicherheit mindert und somit in jedem Fall soweit als möglich ausgeschlossen werden sollte. Mit dem erfindungsgemäßen Verfahren kann sich der Fahrzeugführer als Bediener vollständig auf das Verkehrsgeschehen konzentrieren.

Es ist denkbar, den Aufbau der Darstellung des Anzeige- und/oder Eingabefeldes mit einer Sequenz von sichtbar nacheinander angezeigten Einzelbildern vorzunehmen. Eine besonders übersichtliche und harmonische Darstellungsweise ergibt sich gemäß einer vorteilhaften Weiterbildung der Erfindung hingegen, wenn die Darstellung des Anzeige- und/oder Eingabefeldes kontinuierlich aufgebaut wird.

Man könnte sich ferner vorstellen, daß der Aufbau der Darstellung mit gleichbleibender Geschwindigkeit durchgeführt wird. Es ist jedoch von besonderem Vorteil für eine einfache Bedienung, wenn die Geschwindigkeit des sukzessiven Aufbaus der Darstellung des Anzeige- und/oder Eingabefeldes während des Aufbaus ansteigt. Dadurch wird dem Bediener die Möglichkeit eröffnet, mit einem ersten Blick zu erfassen, ob tatsächlich die gewünschte Schaltfläche aktiviert worden ist; andernfalls könnte zum Beispiel eine andere Auswahl getroffen werden. Ist jedoch die Aktivierung als richtig erkannt, so ist es von Vorteil, wenn durch die ansteigende Geschwindigkeit der Darstellungsaufbau dann schnell erfolgt, so daß eine weitere Bedienung rasch vollzogen werden kann.

Der Aufbau der Darstellung des Anzeige- und/oder Eingabefeldes kann beispielsweise konzentrisch um die Schaltfläche herum erfolgen. Eine besonders eindeutige Visualisierung der Verbindung zwischen Schaltfläche und Anzeige- und/oder Eingabefeld wird gemäß einer anderen vorteilhaften Weiterbildung der Erfindung aber dann erreicht, wenn der sukzessive Aufbau der Darstellung des Anzeige- und/oder Eingabefeldes von einem sich in einem Randbereich der Schaltfläche bildenden Ansatz ausgeht.

Die Wahrnehmbarkeit wird dabei vorteilhaft weiter gesteigert, wenn der Ansatz in Form einer aus der Schaltfläche ausfließenden Flüssigkeit bis zur Bildung der Darstellung des Anzeige- und/oder Eingabefeldes wächst. Dem Bediener wird somit - zumindest unbewußt und hintergründig - ein Erwachsen des Anzeige- und/oder Eingabefeldes und damit auch dessen Inhalts aus der Schaltfläche heraus vor Augen geführt.

Grundsätzlich ergeben sich die Vorteile der Erfindung sowohl bei monochromen als auch bei mehrfarbigen Darstellungen. Insbesondere eine Bedeutung des Anzeige- und/oder Eingabefeldes als weitere Ebene zu der Funktion der Schaltfläche tritt aber vorteilhaft dann hervor, wenn gemäß einer anderen Weiterbildung der Erfindung die Schaltfläche in einer ersten und das Anzeige- und/oder Eingabefeld in einer davon verschiedenen zweiten Farbe dargestellt wird.

Die einfache Wahrnehmbarkeit des Anzeigeninhalts wird bei dem erfindungsgemäßen Verfahren auch bei nur kurzem Blickkontakt mit der Anzeige dabei vorteilhaft weiter verbessert, wenn sich während des sukzessiven Aufbaus der Darstellung des Anzeige- und/oder Eingabefeldes die Farbe des Feldes von der Farbe der Schaltfläche in die Farbe des Anzeige- und/oder Eingabefeldes fließend ändert.

Zur Durchführung des erfindungsgemäßen Verfahrens schlägt die Erfindung zusätzlich eine Bedienvorrichtung der eingangs genannten Art vor, die dadurch gekennzeichnet ist, daß bei einer Aktivierung der Schaltfläche unter Beibehaltung einer Darstellung der Schaltfläche eine Darstellung des Anzeige- und/oder Eingabefeldes ausgehend von der Schaltfläche sukzessive aufgebaut wird.

Eine solche Bedienvorrichtung visualisiert in besonders anschaulicher Weise Bedienungsstrukturen und vereinfacht damit die Bedienerführung. Der mit der Funktion der Schaltfläche verbundene Inhalt des Anzeige- und/oder Eingabefeldes wird dem Bediener anschaulich angezeigt, zum Beispiel kann das Eingabefeld ein Bedienmenü für die der Schaltfläche zugeordnete Funktion beinhalten. Die erfindungsgemäße Bedienvorrichtung setzt vorgenanntes Verfahren die zu dem Verfahren angeführten Vorteile erzielend um.

Für die Erfindung lassen sich grundsätzlich beliebige, insbesondere elektrooptische, Anzeigen, wie zum Beispiel Kathodenstrahlröhren oder Vakuum-Fluoreszenz-Displays, verwenden. Vorteilhaft besonders einfach und kostengünstig auch in großen Serien zu fertigen ist eine Bedienvorrichtung gemäß der Erfindung aber, wenn der Bildschirm ein Flüssigkristall-Display aufweist. Flüssigkristall-Displays sind in großer Anzahl mit gleichbleibender Qualität preisgünstig herstellbar, weisen ein geringes Gewicht auf und beanspruchen einen nur geringen Einbauraum. Durch diese Vorteile sind sie besonders für den Einsatz in Kraftfahrzeugen geeignet.

Die Anzeige der erfindungsgemäßen Bedienvorrichtung ermöglicht eine besonders große Informationsvielfalt, wenn der Bildschirm vorzugsweise ein Farbbildschirm ist.

Wenn gemäß einer weiteren vorteilhaften Ausgestaltung der Erfindung der Bildschirm rechteckig ist und ein Breiten-Höhen-Verhältnis von in etwa 16 : 9 aufweist, dann sind Darstellungen auf dem Bildschirm besonders gut ablesbar, da diese, die Horizontale betonende Bildschirmgeometrie den menschlichen Sehgewohnheiten und -möglichkeiten weitestgehend entgegenkommt.

Eine besonders kostengünstige, aus einfachen Bauelementen aufgebaute Bedienvorrichtung gemäß der Erfindung liegt vorteilhaft dann vor, wenn das Eingabemittel zur Aktivierung der Schaltfläche eine Eingabetaste aufweist.

Besonders wenige Bauelemente kann die Bedienvorrichtung vorteilhaft dann aufweisen, wenn das Eingabemittel zur Aktivierung der Schaltfläche einen Dreh-Drück-Steller aufweist. Damit ist lediglich ein einziges Stellelement erforderlich, um auch mehrere Schaltflächen wahlweise anzuwählen oder weitere Bedienfunktionen auszuführen. Vorteilhaft kann die zusätzliche Drückfunktion eines Dreh-Drück-Stellers dazu benutzt werden, eine durch Drehen angewählte Schaltfläche auszuwählen, wodurch eine Aktivierung der Schaltfläche erfolgt.

Vorzugsweise ist der Dreh-Drück-Steller ein haptischer Steller, womit eine gefühlsmäßige Rückmeldung (zum Beispiel durch Raststufen, deren Anzahl der Anzahl der aktivierbaren Schaltflächen entspricht) an einen Bediener erfolgt.

Besonders gering ist sowohl die Anzahl von Eingabeelementen der Bedienvorrichtung als auch der für diese benötigte Einbauraum, wenn gemäß einer anderen vorteilhaften Weiterbildung der Erfindung der Bildschirm ein das Eingabemittel zur Aktivierung der Schaltfläche aufweisendes Touch Panel aufweist. Bei dem Touch Panel sind in einfacher Weise auf dem Bildschirm die Flächenbereiche der Schaltflächen derart ausgebildet, daß bei einer Berührung derselben eine Aktivierung der Schaltflächen ausgeführt wird.

Von besonderem Vorteil ist es, wenn mit der Bedienvorrichtung ein Radiogerät und/oder ein Navigationssystem und/oder eine Telekommunikationseinrichtung und/oder ein Fahrzeuginformationssystem und/oder eine Klimatisierungseinrichtung in einem Kraftfahrzeug ansteuerbar ist. Jede dieser Einrichtungen und Systeme hat eine Vielzahl von Eingabe- und Stellmöglichkeiten, so daß durch eine Bedienung mit einer erfindungsgemäßen Vorrichtung eine erhebliche Handhabungsvereinfachung eintritt.

Die Bedienung ist dabei besonders leicht erlern- und erfaßbar, wenn mit der Aktivierung der Schaltfläche das Radiogerät oder das Navigationssystem oder die Telekommunikationseinrichtung oder das Fahrzeuginformationssystem oder die Klimatisierungseinrichtung in dem Kraftfahrzeug zu einer Ansteuerung mit der Bedienvorrichtung angewählt wird. Vereinfachend wirkt dabei weiterhin, wenn für jede der mit der Bedienvorrichtung anzusteuernden Einrichtungen eine eigene Schaltfläche vorgesehen ist.

Zum Beispiel für den Betrieb eines Navigationssystems, bei dem üblicherweise eine Darstellung von Karten und/oder Routen erforderlich ist, ist es von besonderem Vorteil, wenn gemäß einer anderen Weiterbildung der Erfindung das Anzeige- und/oder Eingabefeld einen Bereich zu einer Wiedergabe von Bildern aufweist. Dieses Feld dient somit im wesentlichen graphischen Darstellungen, vergleichbar einem Monitor. Dabei können beispielsweise auch Videosequenzen zur Anzeige gebracht werden.

Vor allem zur Ansteuerung von über eine Bedienstruktur zu betreibenden Einrichtungen ist es gemäß einer anderen Weiterbildung der Erfindung besonders vorteilhaft, wenn das Anzeige- und/oder Eingabefeld eine Schaltfläche aufweist.

Eine übersichtliche Bedienbarkeit läßt sich in einfacher Weise dabei vorzugsweise erreichen, wenn das Anzeige- und/oder Eingabefeld ein Schaltflächen aufweisendes Menü aufweist, so daß verschiedene Bedienungsoptionen parallel zueinander dem Bediener angeboten werden können.

Die Erfindung läßt zahlreiche Ausführungsformen zu. Zur weiteren Verdeutlichung ihres Grundprinzips ist eine davon anhand eines in der beigefügten Zeichnung dargestellten Ausführungsbeispiels näher erläutert. Diese zeigt in
- Figur 1: eine erfindungsgemäße Bedienvorrichtung in vereinfacht dargestellter Draufsicht,
- Figur 2: einen Bildschirm der Bedienvorrichtung nach Figur 1 mit einer Schaltfläche,
- Figuren 3 - 5: den Bildschirm aus Figur 2 mit sukzessivem Aufbau eines Anzeige- und/oder Eingabefeldes und
- Figuren 6 und 7: den Bildschirm aus Figuren 2 - 5 mit jeweils unterschiedlichem Anzeige- und/oder Eingabefeld.

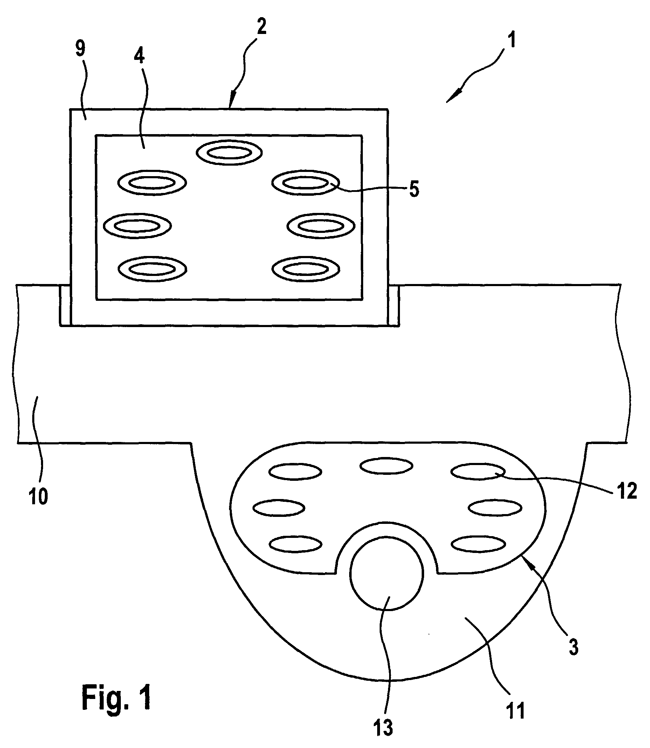

Figur 1 zeigt eine Bedienvorrichtung 1 mit einer Anzeigeeinheit 2 und einem Eingabemittel 3 eines hier nicht weiter dargestellten Kraftfahrzeugs. Die Anzeigeeinheit 2 ist dabei in einem oberen Bereich einer Instrumententafel 10 angeordnet und in diese versenkbar. Ein Rahmen 9 der Anzeigeeinheit 2 haltert einen als Flüssigkristall-Display ausgebildeten rechteckigen Bildschirm 4. Auf dem Bildschirm 4 sind sieben Schaltflächen 5, jeweils zur Ansteuerung eines Telefons, eines Servicesystems, eines Navigationssystems, einer Klimatisierungseinrichtung, eines Radios, einer Internetverbindung und einer Videoanlage, dargestellt.

Mittels Eingabetasten 12 des im Bereich einer Mittelkonsole 11 des Kraftfahrzeuges angeordneten Eingabemittels 3 sind die auf dem Bildschirm 4 dargestellten Schaltflächen 5 wahlweise aktivierbar. Dabei ist jeweils eine Eingabetaste 12 einer der Schaltflächen 5 zugeordnet.

Darüber hinaus weist das Eingabemittel 3 einen Dreh-Drück-Steller 13 auf, der alternativ zu den Eingabetasten 12 für die Aktivierung der Schaltflächen 5 zu verwenden ist. Dabei wird mittels eines hier nicht gezeigten Cursors auf dem Bildschirm 4 durch Drehen des Dreh-Drück-Stellers 13 eine der Schaltflächen 5 markiert und durch nachfolgendes Drücken des Dreh-Drück-Stellers 13 aktiviert.

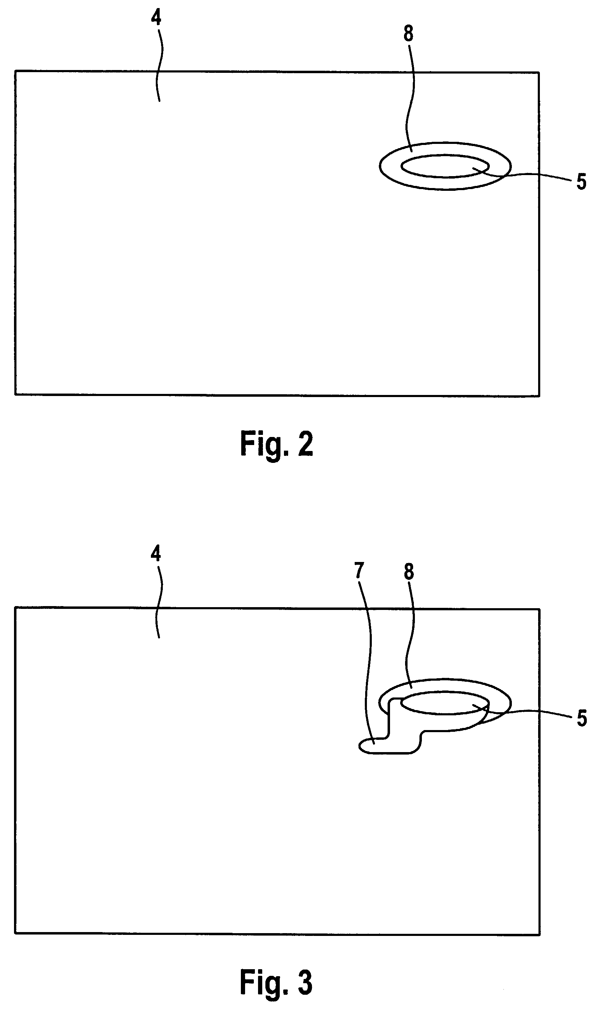

Figur 2 zeigt den Bildschirm 4 mit einer in dem rechten oberen Eckbereich des Bildschirms 4 angeordneten einzelnen, länglichen Schaltfläche 5, die von einem Randbereich 8 umgeben ist. Bei einer Aktivierung der Schaltfläche 5 durch Betätigung des Eingabemittels 3 (siehe Figur 1) bildet sich in dem Rand bereich 8 der Schaltfläche 5 ein Ansatz 7 (siehe Figur 3).

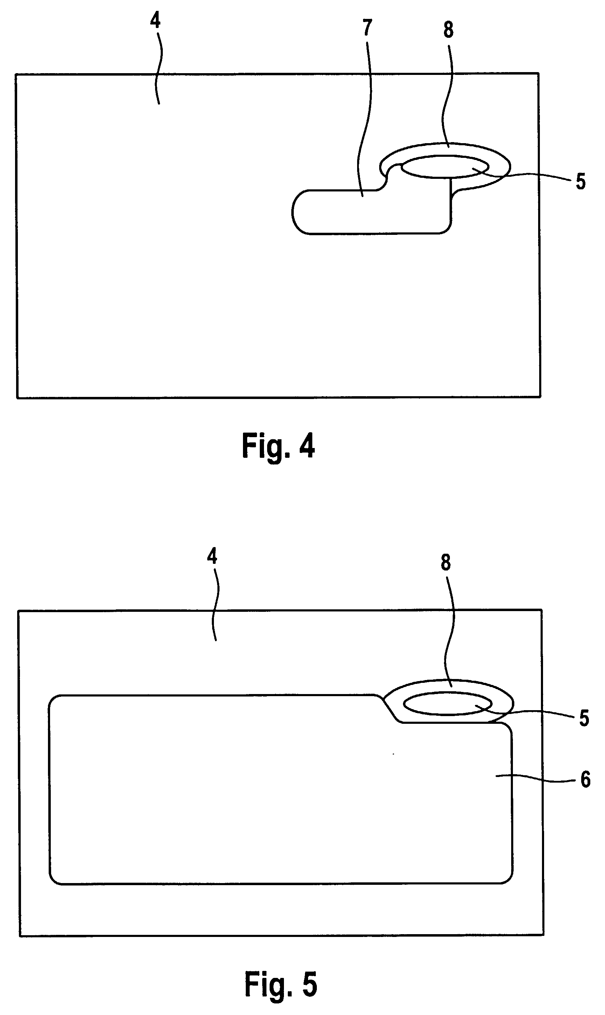

Wie an der Abfolge der Figuren 2 bis 5 unmittelbar erkennbar ist, vergrößert sich die Fläche des Ansatzes 7 sukzessive, wodurch ein Anzeige- und/oder Eingabefeld 6 - wie in Figur 5 gezeigt - aufgebaut wird. Dieser Aufbau geschieht kontinuierlich, und für einen Beobachter entsteht der Eindruck, daß das Anzeige- und/oder Eingabefeld 6 aus der Schaltfläche 5 ausfließt. In jedem Stadium des Aufbaus des Anzeige- und/oder Eingabefeldes 6, auch nach Erreichen von dessen Endform, bleibt die Schaltfläche 5 weiterhin sichtbar.

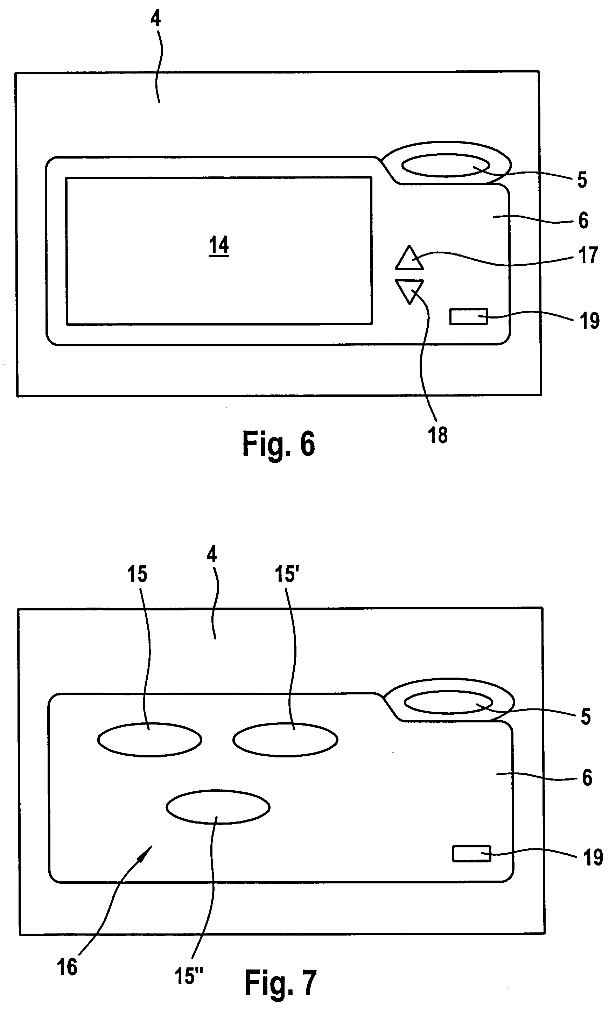

Ein Anzeige- und/oder Eingabefeld 6 mit einem Bereich 14 zu einer Wiedergabe von Bildern zeigt Figur 6. In dem Bereich 14 sind beispielsweise Videosequenzen abspielbar; für einen Vor- oder Rücklauf der Sequenzen weist das Anzeige- und/oder Eingabefeld 6 zusätzlich eine Vorspulschaltfläche 17 und eine Rückspulschaltfläche 18 auf. Darüber hinaus ist eine Rückstelltaste 19 zum Schließen des Anzeige- und/oder Eingabefeldes 6 vorgesehen.

Nach Figur 7 weist ein Anzeige- und/oder Eingabefeld 6 ein Menü 16 mit Schaltflächen 15, 15', 15'' auf, mit denen jeweils verschiedene Unterfunktionen zu einer mit Aktivierung einer Schaltfläche 5 ansteuerbaren Funktion anwählbar sind. Hier ist ebenfalls eine Rückstelltaste 19 zum Verlassen des Menüs 16 und Schließen des Anzeige- und/oder Eingabefeldes 6 vorgesehen.

## Patentansprüche

1. Verfahren zur Darstellung einer mit einem Eingabemittel (3) aktivierbaren Schaltfläche (5) und eines mit der Schaltfläche (5) korrespondierenden Anzeige- und/oder Eingabefeldes (6) auf einem Bildschirm (4) einer Anzeigeeinheit (2) einer die Anzeigeeinheit (2) und das Eingabemittel (3) aufweisenden Bedienvorrichtung (1), insbesondere in einem Kraftfahrzeug, **dadurch gekennzeichnet**, daß die Schaltfläche (5) auf dem Bildschirm (4) dargestellt wird, daß die Schaltfläche (5) durch Betätigung des Eingabemittels (3) aktiviert wird und daß unter Beibehaltung der Darstellung der Schaltfläche (5) eine Darstellung des Anzeige- und/oder Eingabefeldes (6) auf dem Bildschirm (4) ausgehend von der Schaltfläche (5) sukzessive aufgebaut wird.

2. Verfahren zur Darstellung nach Anspruch 1, **dadurch gekennzeichnet**, daß die Darstellung des Anzeige- und/oder Eingabefeldes (6) kontinuierlich aufgebaut wird.

3. Verfahren zur Darstellung nach Anspruch 1 oder 2, **dadurch gekennzeichnet**, daß die Geschwindigkeit des sukzessiven Aufbaus der Darstellung des Anzeige- und/oder Eingabefeldes (6) während des Aufbaus ansteigt.

4. Verfahren zur Darstellung nach einem der vorhergehenden Ansprüche, **dadurch gekennzeichnet**, daß der sukzessive Aufbau der Darstellung des Anzeige- und/oder Eingabefeldes (6) von einem sich in einem Randbereich (8) der Schaltfläche (5) bildenden Ansatz (7) ausgeht.

5. Verfahren zur Darstellung nach Anspruch 4, **dadurch gekennzeichnet**, daß der Ansatz (7) in Form einer aus der Schaltfläche (5) ausfließenden Flüssigkeit bis zur Bildung der Darstellung des Anzeige- und/oder Eingabefeldes (6) wächst.

6. Verfahren zur Darstellung nach einem der vorhergehenden Ansprüche, **dadurch gekennzeichnet**, daß die Schaltfläche (5) in einer ersten und das Anzeige- und/oder Eingabefeld (6) in einer davon verschiedenen zweiten Farbe dargestellt wird.

7. Verfahren zur Darstellung nach Anspruch 6, **dadurch gekennzeichnet**, daß sich während des sukzessiven Aufbaus der Darstellung des Anzeige- und/oder Eingabefeldes (6) die Farbe des Feldes (6) von der Farbe der Schaltfläche (5) in die Farbe des Anzeige- und/oder Eingabefeldes (6) fließend ändert.

8. Bedienvorrichtung (1), insbesondere für ein Kraftfahrzeug, zur Durchführung des Verfahrens nach einem der vorhergehenden Ansprüche mit einer einen Bildschirm (4) aufweisenden Anzeigeeinheit (2) und mit einem Eingabemittel (3), wobei auf dem Bildschirm (4) eine mit dem Eingabemittel (3) aktivierbare Schaltfläche (5) und ein mit der Schaltfläche (5) korrespondierendes Anzeige- und/oder Eingabefeld (3) darstellbar ist, **dadurch gekennzeichnet**, daß bei einer Aktivierung der Schaltfläche (5) unter Beibehaltung einer Darstellung der Schaltfläche (5) eine Darstellung des Anzeige- und/oder Eingabefeldes (6) ausgehend von der Schaltfläche (5) sukzessive aufgebaut wird.

9. Bedienvorrichtung nach Anspruch 8, **dadurch gekennzeichnet**, daß der Bildschirm (4) ein Flüssigkristall-Display aufweist.

10. Bedienvorrichtung nach Anspruch 8 oder 9, **dadurch gekennzeichnet**, daß der Bildschirm (4) ein Farbbildschirm ist.

11. Bedienvorrichtung nach einem der Ansprüche 8 bis 10, **dadurch gekennzeichnet**, daß der Bildschirm (4) rechteckig ist und ein Breiten-Höhen-Verhältnis von in etwa 16 : 9 aufweist.

12. Bedienvorrichtung nach einem der Ansprüche 8 bis 11, **dadurch gekennzeichnet**, daß das Eingabemittel (3) zur Aktivierung der Schaltfläche (5) eine Eingabetaste (12) aufweist.

13. Bedienvorrichtung nach einem der Ansprüche 8 bis 12, **dadurch gekennzeichnet**, daß das Eingabemittel (3) zur Aktivierung der Schaltfläche (5) einen Dreh-Drück-Steller (13) aufweist.

14. Bedienvorrichtung nach Anspruch 13, **dadurch gekennzeichnet**, daß der Dreh-Drück-Steller (13) ein haptischer Steller ist.

15. Bedienvorrichtung nach einem der Ansprüche 8 bis 14, **dadurch gekennzeichnet**, daß der Bildschirm (4) ein das Eingabemittel zur Aktivierung der Schaltfläche (5) aufweisendes Touch Panel aufweist.

16. Bedienvorrichtung nach einem der Ansprüche 8 bis 15, **dadurch gekennzeichnet**, daß mit der Bedienvorrichtung (1) ein Radiogerät und/oder ein Navigationssystem und/oder eine Telekommunikationseinrichtung und/oder ein Fahrzeuginformationssystem und/oder eine Klimatisierungseinrichtung in einem Kraftfahrzeug ansteuerbar ist.

17. Bedienvorrichtung nach einem der Ansprüche 8 bis 16, **dadurch gekennzeichnet**, daß mit der Aktivierung der Schaltfläche (5) das Radiogerät oder das Navigationssystem oder die Telekommunikationseinrichtung oder das Fahrzeuginformationssystem oder die Klimatisierungseinrichtung in dem Kraftfahrzeug zu einer Ansteuerung mit der Bedienvorrichtung (1) angewählt wird.

18. Bedienvorrichtung nach einem der Ansprüche 8 bis 17, **dadurch gekennzeichnet**, daß das Anzeige- und/oder Eingabefeld (6) einen Bereich (14) zu einer Wiedergabe von Bildern aufweist.

19. Bedienvorrichtung nach einem der Ansprüche 8 bis 18, **dadurch gekennzeichnet**, daß das Anzeige- und/oder Eingabefeld (6) eine Schaltfläche (15) aufweist.

20. Bedienvorrichtung nach Anspruch 19, **dadurch gekennzeichnet**, daß das Anzeige- und/oder Eingabefeld (6) ein Schaltflächen (15, 15', 15'') aufweisendes Menü (16) aufweist.
